# EUROPÄISCHE PATENTSCHRIFT

(11) **EP 0 452 709 B1**
(45) Veröffentlichungstag und Bekanntmachung des Hinweises auf die Patenterteilung: **27.09.1995**
(21) Anmeldenummer: 91104694.4
(22) Anmeldetag: 26.03.1991
(51) Int. Cl.: G02C 5/12

(54) **Brille mit Nasenauflage**
Spectacles with nose pad
Lunettes avec support nasal

(30) Priorität: 19.04.1990 DE 9004468 U
(43) Veröffentlichungstag der Anmeldung: 23.10.1991
(73) Patentinhaber: F+W FREY & WINKLER GmbH, D-75203 Königsbach-Stein (DE)
(72) Erfinder: Schmolz, Ingeborg, W-8000 München 40 (DE); Winkler, Rolf, W-7531 Elsingen (DE)
(74) Vertreter: Frank, Gerhard, Dipl.-Phys.

(56) Entgegenhaltungen:
- EP-A- 0 191 887
- DE-U- 9 004 468
- FR-A- 2 428 857
- US-A- 4 787 729

## Beschreibung

Die Erfindung betrifft eine Brille gemäß dem Oberbegriff des Patentanspruchs 1.

Die ordnungsgemäße Positionierung eines Brillengestells ist von erheblicher Bedeutung, da hiervon einerseits der Strahlengang des einfallenden Lichtes und damit die beabsichtigte optische Wirkung bestimmt wird, andererseits aber eine anatomisch ungünstige oder ungeschickte Positionierung auch zu Beeinträchtigungen insbesondere Hautbeanspruchungen in den Auflagebereichen der Brille führen kann.

Beide Problemkreise hängen naturgemäß zusammen und die eigentliche Problematik erwächst daraus, daß die hierfür relevanten anatomischen Gegebenheiten im Kopfbereich, also im Bereich der Nasenwurzel und der Nasenflügel und im Bereich der Ohren, bei jedem Menschen verschieden sind und auch bei Menschen unterschiedlicher Rasse voneinander abweichen.

Beispielhaft seien hier nur genannt die Variationsbreite der Stirn um bis zu 10 mm, Formgebung und Breite der Nase usw. Eine Zusammenstellung dieser für die Konzipierung eines Brillengestells relevanten anatomischen Gegebenheiten findet sich in NOJ 11/1990, Seite 8 bis 19.

Um eine in optischer und anatomischer Hinsicht befriedigende Positionierung des Brillengestells an den individuellen Brillenträger zu ermöglichen, sind daher konstruktive Gestaltungen notwendig, die auf irgend eine Weise so weit anpaßbar sind, daß die für den jeweiligen Brillenträger optimale Tragesituation zumindest in groben Zügen erreichbar ist. Diese Anpassung kann grundsätzlich auf zwei verschiedenen Art und Weisen erreicht werden, nämlich durch ein Bauteil, das in seiner Form in sich variabel ist (wie bei der gattungsgemäßen US-A-4,787,729), oder das in verschiedenen Größen und Abmessungen verfügbar ist. In letzerem Fall ist es dann Aufgabe des Augenoptikers, an einer industriell gefertigten Brillenfassung mit handwerklichem Geschick solche Veränderungen vorzunehmen bzw. maßlich passende Bauteile auszuwählen, um die individuelle Anpassung an den Brillenträger zu ermöglichen. So werden beispielsweise von Herstellern Brillenfassungen in drei verschiedenen Brückenweiten (16 mm, 18 mm und 20 mm) angeboten, um zumindest eine Grobanpassung auf die Breite des Nasenrückens des Brillenträgers zu ermöglichen.

In enger begrenzten Bereichen sind Anpassungen an die anatomischen Gegebenheiten des Brillenträgers auch durch eine weiche oder elastische Gestaltung erzielbar, wie dies beispielsweise durch die Verwendung von Silikon als Mantelungsmaterial bekannt ist, was zudem noch den Vorteil eines hohen Tragekomforts mit sich bringt.

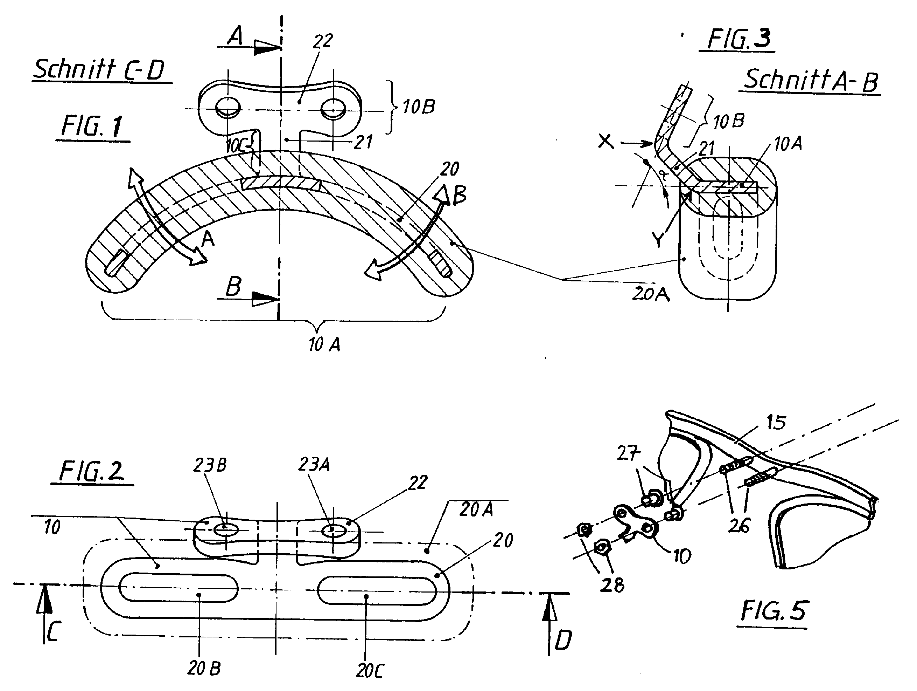

Die US-A 4,787,729 zeigt eine gattungsgemäße Brille, bei der die Position der Nasenauflage dadurch einstellbar ist, daß das Abstandselement an der Halteplatte sowohl um eine Achse parallel zur Brillenbrücke verschwenkbar, als auch mittels Langlöchern axial verschiebbar und somit der Abstand der Nasenauflage von der Halteplatte einstellbar ist. Bei dem in Fig. 3 dargestellten Ausführungsbeispiel dieser vorbekannten Brille besteht die konstruktive Realisierung aus vier gebogenen U-Elementen, einer H-förmigen Platte mit vier Schlitzen und vier Schrauben, zwei vorstehenden Stiftaufnahmen auf der H-förmigen Platte, einer weiteren Schraube, dem Verbindungsarm, der darauf zu montierenden Nasenauflage und schließlich den darauf evtl. zu montierenden weichen Auflagekissen. Die Einstellbarkeit der Nasenauflage wird bei dieser Lösung mit einem für solche Massenartikel nicht mehr vertretbaren fertigungstechnischen Aufwand erkauft, da eine Vielzahl von Einzelteilen separat gefertigt (z.B. gestanzt) werden und dann in mühsamer Kleinarbeit zusammengebaut werden müssen.

Auch in ästhetischer Hinsicht ist eine solche Konstruktion infolge ihres "technischen" Charakters sehr unbefriedigend, beispielsweise wenn das Abstandselement durch die Halteplatte hindurchgreift und von außen sichtbar ist. Die in Fig. 1 dieses Patentes dargestellte Außenansicht des Brückenbereichs der Brille spricht insofern für sich selbst. Durch diese fertigungstechnischen und ästhetischen Nachteile ist ein "Nasenauflagemechanismus" gemäß dem gattungsbildenden Patent in der Praxis kommerziell nicht verwertbar.

Aus der EP-A 01 91 887 ist eine Seitenstegpartie oder Sattelstegpartie für eine Brille bekannt, die aus einem Stegplättchen und einer Aufnahme für einen Stegarm besteht, wobei der Verbindungsbereich zwischen Stegplättchen und Aufnahme biegsam ausgebildet ist. Diese Lösung ist zwar in dem Bereich, wo sie dargestellt ist, konstruktiv wesentlich einfacher gegenüber der oben beschriebenen gattungsgemäßen Lösung, jedoch ist über die Ausbildung der Sattelstegpartie und deren Verbindung mit einer Brillenbrücke in dieser Druckschrift nichts ausgeführt, so daß insofern von starren Stegarmen ausgegangen werden muß, auf die die Sattelstegpartie aufgeschoben werden kann. Daraus folgt, daß wegen des gelenkartigen Bereichs zwischen Aufnahmehülse und Stegplättchen lediglich eine winkelmäßige Verschwenkung des Stegplättchens möglich ist, jedoch keine Abstandsvariierung als solche erläutert ist, d.h. die dort gezeigte einfachere konstruktive Lösung ist weniger leistungsfähig. Darüber hinaus besteht die Gefahr, daß infolge der Belastung des Gelenkbereichs auf einer Strecke im Millimeter-Bereich durch die mehrfache Beanspruchung des Kunststoffmaterials hier über die Zeit Ermüdungserscheinungen des Materials auftreten und die Bruchgefahr in diesem Bereich sehr hoch ist. Diese Lösung betrifft also nur einen Teil des Verbindungsmechanismus zwischen Brillenbrücke und Nasenauflage und ist insofern mit dem gattungsgemäßen Gegenstand nur bedingt vergleichbar.

Aufgabe der Erfindung ist es, eine Nasenauflage so auszubilden, daß sie einfach herstellbar und in einer einzigen Größe zuverlässig auf individuelle anatomische Gegebenheiten anpaßbar ist und zudem einen hohen Tragekomfort aufweist.

Erfindungsgemäß wird diese Aufgabe durch den kennzeichnenden Teil des Patentanspruchs 1 gelöst.

Mit der erfindungsgemäßen Lösung ergibt sich sowohl eine Verformungsmöglichkeit für den Bügel, als auch eine Einstellung des Abstandes und des Auflagewinkels durch entsprechende relative Positionierung bzw. Abbiegung des Mittelabschnittes gegenüber den beiden Endabschnitten, die den Bügel bzw. die Halteplatte bilden. Beispielsweise ist durch Verändern des Biegewinkels zwischen Halteplatte und Bügel eine leichte Anpassung an einen steileren Nasenrücken möglich, wie er beispielsweise bei Asiaten oft angetroffen wird.

Gemäß einer Ausgestaltung ist vorgesehen, daß der Bügel Öffnungen zum Durchgriff des Materials einer Silikon-Ummantelung aufweist. Durch geeignete Dimensionierung dieser Öffnungen läßt sich der Materialquerschnitt des Bügels im Bereich beidseits der Öffnungen wählen, derart, daß eine Formung des kreisbogenähnlich vorgeformten Bügels leicht möglich ist, so daß auch eine eventuell noch notwendige Feinanpassung der Auflagefläche an die Nasenrückenform des Brillenträgers ohne Schwierigkeiten durchgeführt werden kann; damit ist insbesondere auch gewährleistet, daß die Nasenflügel von dem Gewicht der Brille entlastet werden, was insbesondere bei schweren Brillengestellen von Bedeutung ist, um Behinderungen und Beeinträchtigungen des Atmungsvorganges zu vermeiden.

Darüber hinaus gestattet die erfindungsgemäße Lösung durch Verwendung eines einstückigen Formteils eine einfache Herstellung, da dieses Formteil als Stanzteil ausgebildet sein kann.

Weitere wesentliche Vorteile der Gestaltung der Nasenauflage nach der Erfindung bestehen in der äußerst kompakten und unauffälligen Montage am Brillengestell, so daß keinerlei ästhetische Beeinträchtigungen des Erscheinungsbildes der Brille auftreten können. An jeder Brille, ob Metallgestell oder Kunststoffgestell, können entsprechende Gewindezapfen angebracht oder eingelassen werden, die die Halteplatte durchgreifen und über die die Nasenauflage leicht am Brillengestell befestigbar ist.

Eine bevorzugte Ausführungsform sieht vor, daß die Halteplatte mittels Stiften auf der Brücke befestigt ist, die beispielsweise als Gewindestifte auf der Metallbrücke aufgelötet sind, und daß zwischen Brücke und Halteplatte Distanzringe auf diese Stifte aufgeschoben sind.

Hiermit ist eine weite Variationsbreite bei der Einstellung des Abstandes der Brille vom Gesicht des Brillenträgers auf einfache Art und Weise erzielbar, die Distanzringe können hier beispielsweise aus Kunststoff sein, können aber auch aus Metall sein und/oder an die übrige Gestaltung des Brillengestells material- und farbmäßig angepaßt sein. Solche Distanzringe können beispielsweise 1 mm oder 2 mm dick sein.

Weitere vorteilhafte Ausgestaltungen sind weiteren Unteransprüchen entnehmbar.

Ein Ausführungsbeispiel der erfindungsgemäßen Brille wird nun anhand von Zeichnungen näher erläutert, es zeigen:
- Fig. 1: einen Längsschnitt in der Ebene C-D der Figur 2 durch die Nasenauflage,
- Fig. 2: eine Aufsicht auf den Bügel der Nasenauflage,
- Fig. 3: einen Querschnitt in der Ebene A-B durch die Nasenauflage der Figur 1 in der Ebene A-B,

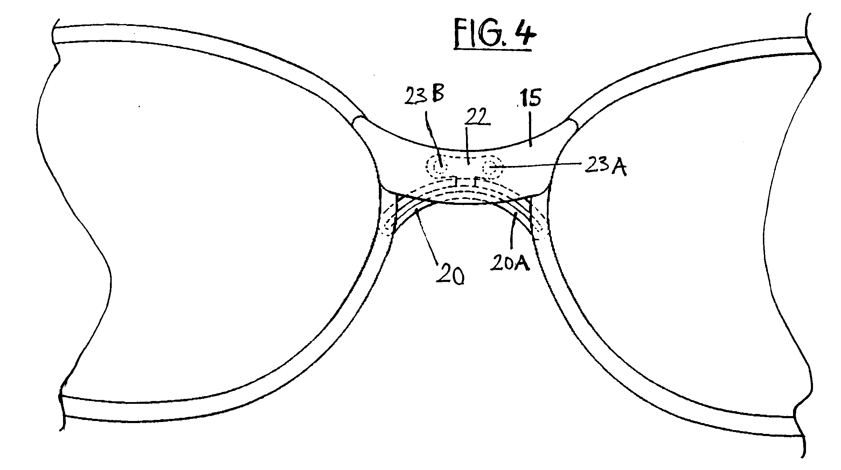

- Fig. 4: eine Vorderansicht einer Brille mit einer montierten Nasenauflage und
- Fig. 5: eine perspektivische Prinzipdarstellung der Montage einer Nasenauflage an einer Brille.

Die Nasenauflage ist dreiteilig ausgeführt, sie besteht aus einer Halteplatte 22 mit Bohrungen 23 zum Durchgriff von Gewindestiften zur Montage an der Brille, einem Abstandselement 21 und einem Bügel 20 zur Auflage auf dem Nasenrücken. Eine solche Nasenauflage kann entweder über ein separates Halteelement mit Gewindestiften oder auch direkt über Gewindestifte montiert werden, die auf der Rückseite der Brücke hervorragen und in dieser montiert bzw. eingelassen oder eingespritzt sind.

Die Funktionen des Bügels 20, des Abstandselementes 21 und der Halteplatte 22 werden von einem einstückigen Edelstahl-Formteil 10 übernommen, dessen erster Endabschnitt 10A den Bügel 20 bildet, dessen zweiter Endabschnitt 10B die Halteplatte 22 bildet und dessen verjüngter Mittelabschnitt 10C als Abstandselement 21 wirkt. Das Formteil 10 kann aus einem Stanzteil entsprechend der Querschnittsdarstellung der Figur 3 abgebogen werden, so daß in Anpassung an die Form und Positionierung der Brücke der Brille die Ebenen der beiden Endabschnitte 10A,10B einen Winkel α von beispielsweise 60° bis 70° einschließen. Vorteilhafterweise weist das Edelstahl-Formteil eine Dicke von 0,4-0,8 mm auf.

Der Bügel 20 bzw. der diesen Bügel 20 bildende Endabschnitt 10A ist mit einem weichen Kunststoffmaterial, beispielsweise Silikon, ummantelt und weist zur besseren Fixierung dieses Kunststoffmaterials Öffnungen 20B,20C auf (Shore-A-Härte des Silicon-Materials im Bereich von 30 bis 60).

Der Bügel 20 ist beim dargestellten Ausführungsbeispiel etwa in Form eines Viertelkreises ausgebildet, durch die Öffnungen 20B,20C wird im seitlichen Flankenbereich des Bügels 20 eine Querschnittsreduzierung bewirkt, die ein leichtes Auf- oder Zubiegen des Bügels in Richtung der Doppelpfeile A,B (Figur 1) und somit eine Anpassung an die Nasenrückenform ermöglicht.

Aus der Schnittdarstellung der Figur 3 ist leicht zu entnehmen, daß der Winkel α zwischen der Ebene der beiden Endabschnitte 10A,10B sehr einfach durch unterschiedliche Abbiegung an den Übergangsbereichen X,Y zwischen Mittelabschnitt und Endabschnitte geändert werden kann und somit eine Anpassung der Nasenauflage-Ebene an die Brückenebene des jeweils eingesetzten Brillengestells. Durch geeignete Kombination der Abbiegewinkel an den Abbiegestellen X,Y läßt sich auch in bestimmtem Maße eine Abstandseinstellung der Auflagefläche relativ zur Ebene der Halteplatte erzielen. Sowohl Abstandsänderungen als auch Änderungen des Winkels α, als auch Änderungen der Formgebung des Bügels 20 sind somit durch einfache Abbiegungen und Verformungsvorgänge möglich, die schnell und mit großer Präzision vorgenommen werden können.

Am Beispiel der Figur 5 ist schließlich noch ein Montagebeispiel skizziert:

Auf der Brücke 15 sind zwei Gewindestifte 26 aufgelötet (bei einer Kunststoffbrücke sind entsprechende Gewindeanker eingegossen), auf die die Nasenauflage 10 aufschiebbar und mit Muttern 28 sicherbar ist. Sollte die oben angesprochene Variationsbreite der Abstandseinstellung von der Brücke 15 zum Auflagebereich auf dem Nasenrücken nicht ausreichen, so können zwei Distanzringe 27 zwischen Brücke 15 und Formteil 10 eingelegt werden, auch diese Anpassung kann auf einfachste Weise somit ergänzt werden.

## Patentansprüche

1. Brille mit einer die Ränder der Gläser verbindenden Brücke (15) und einer auf der dem Brillenträger zugewandten Seite der Brücke (15) montierbaren Nasenauflage, die einen einteiligen Bügel (20) beinhaltet, der über ein Abstandselement (21) an einer Halteplatte (22) gehalten ist, und der kreisbogenähnlich geformt ist, derart, daß er im wesentlichen nur auf dem Nasenrücken aufliegt, dadurch gekennzeichnet, daß Bügel (20), Abstandselement (21) und Halteplatte (22) jeweils als Abschnitt eines einstückigen Formteils (10) ausgebildet sind, dessen erster Endabschnitt (10A) den Bügel (20) und dessen zweiter Endabschnitt (10B) die Halteplatte (22) bildet, die miteinander über einen Mittelabschnitt (10C) verbunden sind, der das Abstandselement (21) bildet, und daß die Ebenen der beiden Endabschnitte (10A,10B) des Formteils (10) einen Winkel (α) miteinander einschließen, der durch Abbiegung X,Y des flachen, metallischen Formteils (10) im Übergangsbereich zum jeweiligen Endabschnitt (10A,10B) einstellbar ist.

2. Brille nach Anspruch 1, dadurch gekennzeichnet, daß das Formteil (10) aus Edelstahl ist und eine Dicke von 0,4 bis 0,8 mm aufweist.

3. Brille nach Anspruch 1, dadurch gekennzeichnet, daß der Bügel (20) eine weiche Ummantelung (20A) aus Kunststoff aufweist und Öffnungen (20B,20C) zum Durchgriff des Kunststoffs aufweist.

4. Brille nach Anspruch 1, dadurch gekennzeichnet, daß die Länge des Abstandselements (10C) mindestens 3 mm beträgt.

5. Brille nach Anspruch 1 oder 2, dadurch gekennzeichnet, daß die Halteplatte (22) zwei Bohrungen (23,23A,23B) aufweist, und daß die Brücke (15) Stifte (18,26) mit Außengewinde aufweist, die die Bohrungen der Halteplatte (22) durchgreifen, und daß Gewindemuttern (28) die Halteplatte (22) an der Brücke (15) sichern.

6. Brille nach Anspruch 5, dadurch gekennzeichnet, daß zwischen Brücke (15) und Halteplatte (10) Distanzringe (27) auf die Stifte (26) aufgeschoben sind.

7. Brille nach Anspruch 5, dadurch gekennzeichnet, daß die Stifte (18) auf einer separaten Halterung (16) aufgebracht sind, die auf der Brücke (15) befestigt ist.

8. Brille nach Anspruch 5, dadurch gekennzeichnet, daß die Stifte (26) unmittelbar auf der Brücke (15) aufgebracht sind.

9. Brille nach Anspruch 8, dadurch gekennzeichnet, daß die Stifte (26) Gewindestifte sind, die auf einer Metallbrücke aufgelötet sind.

10. Brille nach Anspruch 8, dadurch gekennzeichnet, daß die Stifte (26) Gewindeanker sind, die in die Kunststoffbrücke eingelassen sind.

## Claims

1. Spectacles, having a bridge (15), which joins the edges of the lenses, and a nose pad, which is mountable on the side of the bridge (15) facing the wearer of the spectacles and includes a one-piece curved portion (20), which is retained on a retaining plate (22) via a spacer member (21) and has an arcuate configuration such that it substantially rests only on the bridge of the nose, characterised in that curved portion (20), spacer member (21) and retaining plate (22) are each configured as a portion of a one-piece moulded part (10), the first end portion (10A) of which forms the curved portion (20), and the second end portion (10B) of which forms the retaining plate (22), which end portions are interconnected via a central portion (10C) which forms the spacer member (21), and in that the planes of the two end portions (10A, 10B) of the moulded part (10) form with each other an angle (α), which is adjustable by bending at X, Y the flat, metallic moulded part (10) in the transition region to form the respective end portion (10A, 10B).

2. Spectacles according to claim 1, characterised in that the moulded part (10) is formed from stainless steel and has a thickness of between 0.4 and 0.8 mm.

3. Spectacles according to claim 1, characterised in that the curved portion (20) has a soft covering (20A) formed from plastics material and has apertures (20B, 20C) for extending through the plastics material.

4. Spectacles according to claim 1, characterised in that the length of the spacer member (10C) is at least 3 mm.

5. Spectacles according to claim 1 or 2, characterised in that the retaining plate (22) has two bores (23, 23A, 23B), and in that the bridge (15) has pins (18, 26), which are provided with an external thread and extend through the bores in the retaining plate (22), and in that threaded nuts (28) secure the retaining plate (22) on the bridge (15).

6. Spectacles according to claim 5, characterised in that spacer rings (27) are slipped over the pins (26) between bridge (15) and retaining plate (10).

7. Spectacles according to claim 5, characterised in that the pins (18) are mounted on a separate holder (16), which is secured on the bridge (15).

8. Spectacles according to claim 5, characterised in that the pins (26) are mounted directly on the bridge (15).

9. Spectacles according to claim 8, characterised in that the pins (26) are threaded pins which are soldered on a metal bridge.

10. Spectacles according to claim 8, characterised in that the pins (26) are threaded securing means which are inserted in the plastics material bridge.

## Revendications

1. Lunettes avec un pont (15) reliant les bords des verres, et avec un support nasal qui peut être monté sur le côté du pont (15) tourné vers le porteur de lunettes et comprend un étrier (20) d'un seul tenant lequel est maintenu, par l'intermédiaire d'un élément d'écartement (21), sur une plaque de fixation (22), et qui présente une forme en arc de cercle de telle façon qu'il ne repose pour l'essentiel que sur le dos du nez, **caractérisées en ce** que l'étrier (20), l'élément d'écartement (21) et la plaque de fixation (22) constituent chacun une partie d'une pièce profilée (10) d'un seul tenant dont la première section terminale (10A) forme l'étrier (20) et la seconde section terminale (10B), la plaque de fixation (22), les deux éléments étant réunis par l'intermédiaire d'une section médiane (10C) qui constitue l'élément d'écartement (21), et que les plans des deux sections terminales (10A, 10B) de la pièce profilée (10) renferment entre eux un angle (α) qui peut être réglé par pliage X, Y de la pièce profilée (10) métallique plate, dans la zone de transition vers la section terminale (10A, 10B) considérée.

2. Lunettes selon la revendication 1, caractérisées en ce que la pièce profilée (10) est réalisée en acier fin et présente une épaisseur de 0,4 à 0,8 mm.

3. Lunettes selon la revendication 1, caractérisées en ce que l'étrier (20) comprend une gaine tendre (20A) en matière plastique et présente des ouvertures (20B, 20C) pour le passage de la matière plastique.

4. Lunettes selon la revendication 1, caractérisées en ce que la longueur de l'élément d'écartement (10C) est d'au moins 3 mm.

5. Lunettes selon l'une des revendications 1 ou 2, caractérisées en ce que la plaque de fixation (22) présente deux alésages (23, 23A, 23B) que le pont (15) est pourvu de broches (18, 26) avec filetage extérieur qui traversent les alésages de la plaque de fixation (22), et que des écrous (28) bloquent la plaque de fixation (22) sur le pont (15).

6. Lunettes selon la revendication 5, caractérisées en ce que des anneaux d'écartement (27) sont montés sur les broches (26), entre le pont (15) et la plaque de fixation (10).

7. Lunettes selon la revendication 5, caractérisées en ce que les broches (18) sont montées sur une fixation (16) séparée laquelle est montée sur le pont (15).

8. Lunettes selon la revendication 5, caractérisées en ce que les broches (26) sont montées directement sur le pont (15).

9. Lunettes selon la revendication 8, caractérisées en ce que les broches (26) sont des broches filetées soudées sur un pont métallique.

10. Lunettes selon la revendication 8, caractérisées en ce que les broches (26) sont des éléments d'ancrage filetés insérés dans le pont en matière plastique.
